# EUROPEAN PATENT APPLICATION

(11) **EP 2 953 017 A1**
(43) Date of publication of application: **09.12.2015**
(21) Application number: 13873530.3
(22) Date of filing: 30.12.2013
(51) Int. Cl.: G06F 3/0488

(54) **METHOD, APPARATUS AND TERMINAL DEVICE FOR CONTROLLING MOVEMENT OF APPLICATION INTERFACE**

(30) Priority: 31.01.2013 CN 201310038609
(71) Applicant: Xiaomi Inc., Beijing 100085 (CN)
(72) Inventor: SUN, Daqing, Beijing 100085 (CN); ZHU, Cai, Beijing 100085 (CN); LI, Weixing, Beijing 100085 (CN)
(74) Representative: Delumeau, François Guy
(86) International application number: PCT/CN2013/090891
(87) International publication number: WO 2014/117618

(57) **Abstract**

Provided are a method, apparatus and terminal device for controlling movement of an application interface, belonging to the field of interface control. The method comprises: capturing a first touch operation; when a second touch operation being captured in the capturing process of the first touch operation, determining the movement direction and movement distance of the second touch operation; and controlling the application interface to move a distance equal to the movement distance of the second touch operation along the movement direction of the second touch operation. By adopting the technical solutions provided by the disclosure, the application interface is controlled to move according to the movement direction and the movement distance of the second touch operation captured during the capturing process of the first touch operation, for enabling the application interface originally moved page by page to freely move, thus user browsing is more convenient.

## Description

### CROSS-REFERENCE TO RELATED APPLICATIONS

The present application is based upon and claims priority to Chinese Patent Application No. 201310038609.3, filed January 31, 2013, the entire contents of which are incorporated herein by reference.

### TECHNICAL FIELD

The invention generally relates to the field of interface control, and more particularly, to a method, an apparatus for controlling movement of an application interface and a terminal device thereof.

### BACKGROUND

With the development of mobile terminals, more and more mobile terminals are equipped with touch-screen displays. Users may enjoy various functions through screen-touching operations with their fingers performed on the touch-screen displays. Currently, an application interface is conventionally displayed page by page. When an application interface includes two or more pages, the user may perform a set screen-touching operation with his or her fingers on the touch screen to control the application interface to move, so as to view different areas of the application interface page by page. For example, for an operating system desktop, when the user touches the touch-screen display and slides straightly, and when the sliding distance exceeds a preset threshold defined in advance, a next page to a current page of the desktop is displayed. In this manner, contents on different pages of the desktop may be viewed.
In the process of implementing the invention, it is found that at least the following problems exist in the prior art:
in the application interface, only contents of a full page may be displayed, and a part of contents in a page may not be displayed arbitrarily.

### SUMMARY

In order to allow the application interface to move arbitrarily, a method, an apparatus and a terminal device for controlling movement of an application interface is provided by embodiments of the invention. The technical solutions are as follows.

According to a first aspect, there is provided a method for controlling movement of an application interface, the application interface including two or more pages; the method comprises steps of:
capturing a first screen-touching operation;
when capturing a second screen-touching operation during the process of capturing the first screen-touching operation, determining a movement direction and a movement distance of the second screen-touching operation; and
controlling the application interface to move along the movement direction of the second screen-touching operation over a distance equal to the movement distance of the second screen-touching operation.

In combination with the first aspect, in a first possible implementation of the embodiments of the invention, the step of determining the movement direction of the second screen-touching operation comprises steps of:
if an angle between a horizontal direction and a direction determined by a starting-point coordinate and a finishing-point coordinate of the second screen-touching operation is less than or equal to a preset angle, determining the horizontal direction as the movement direction of the second screen-touching operation; and
if the angle between the horizontal direction and the direction determined by the starting-point coordinate and the finishing-point coordinate of the second screen-touching operation is greater than the preset angle, determining a vertical direction as the movement direction of the second screen-touching operation.

In combination with the first aspect, in a second possible implementation of the embodiments of the invention, the step of determining the movement distance of the second screen-touching operation comprises steps of:
acquiring a straight distance between the starting-point coordinate and the finishing-point coordinate according to a starting-point coordinate and a finishing-point coordinate of the second screen-touching operation, and determining the straight distance as the movement distance of the second screen-touching operation;
or,
acquiring an arc distance between the starting-point coordinate and the finishing-point coordinate according to a preset number of coordinates between the starting-point coordinate and the finishing-point coordinate of the second screen-touching operation, and determining the arc distance as the movement distance of the second screen-touching operation.

In combination with the first aspect, in a third possible implementation of the embodiments of the invention, after the step of controlling the application interface to move along the movement direction of the second screen-touching operation over the distance equal to the movement distance of the second screen-touching operation, the method further comprises steps of :
when detecting that the second screen-touching operation is finished, positioning the application interface at a location where the second screen-touching operation is finished.

In combination with the third possible implementation of the embodiments of the invention, in a fourth possible implementation of the embodiments of the invention, after the step of positioning the application interface at the location where the second screen-touching operation is finished, the method further comprises steps of:
capturing a third screen-touching operation for triggering a pagination movement of the application interface; and
controlling the application interface to move to a first full page along a movement direction of the third screen-touching operation.

According to a second aspect, there is provided an apparatus for controlling movement of an application interface, the application interface including two or more pages; the apparatus comprises:
a first capturing module configured to capture a first screen-touching operation, and capture a second screen-touching operation during the process of capturing the first screen-touching operation;
a first determining module configured to determine a movement direction of the second screen-touching operation, when the first capturing module captures the second screen-touching operation during the process of capturing the first screen-touching operation;
a second determining module configured to determine a movement distance of the second screen-touching operation when the first capturing module captures the second screen-touching operation during the process of capturing the first screen-touching operation; and
a first controlling module configured to control the application interface to move along the movement direction of the second screen-touching operation over a distance equal to the movement distance of the second screen-touching operation.

In combination with the second aspect, in a first possible implementation of the embodiments of the invention, the first determining module comprises:
a first direction-determining unit configured to, when the first capturing module captures the second screen-touching operation during the process of capturing the first screen-touching operation, if an angle between a horizontal direction and a direction determined by a starting-point coordinate and a finishing-point coordinate of the second screen-touching operation is less than or equal to a preset angle, determine the horizontal direction as the movement direction of the second screen-touching operation; and
a second direction-determining unit configured to, when the first capturing module captures the second screen-touching operation during the process of capturing the first screen-touching operation, if the angle between the horizontal direction and the direction determined by the starting-point coordinate and the finishing-point coordinate of the second screen-touching operation is greater than the preset angle, determine a vertical direction as the movement direction of the second screen-touching operation.

In combination with the second aspect, in a second possible implementation of the embodiments of the invention, the second determining module comprises:
a first movement distance determining unit configured to, when the first capturing module captures the second screen-touching operation during the process of capturing the first screen-touching operation, acquire a straight distance between the starting-point coordinate and the finishing-point coordinate according to a starting-point coordinate and a finishing-point coordinate of the second screen-touching operation, and determine the straight distance as the movement distance of the second screen-touching operation;
or,
a second movement distance determining unit configured to, when the first capturing module captures the second screen-touching operation during the process of capturing the first screen-touching operation, acquire an arc distance between the starting-point coordinate and the finishing-point coordinate according to a preset number of coordinates between the starting-point coordinate and the finishing-point coordinate of the second screen-touching operation, and determine the arc distance as the movement distance of the second screen-touching operation.

In combination with the second aspect, in a third possible implementation of the embodiments of the invention, the first controlling module is further configured to position the application interface at a location where the second screen-touching operation is finished when the first capturing module detects that the second screen-touching operation is finished.

In combination with the third possible implementation of the embodiments of the invention, in a fourth possible implementation of the embodiments of the invention, the apparatus further comprises:
a second capturing module configured to capture a third screen-touching operation for triggering a pagination movement of the application interface; and
a second controlling module configured to control the application interface to move to a first full page along a movement direction of the third screen-touching operation.

According to a third aspect, there is provided a terminal device for controlling movement of an application interface, the application interface including two or more pages; the terminal device includes:
a touch-screen display;
one or more processors;
a memory; and
one or more modules, stored in the memory and configured to be executed by one or more processors, the one or more modules having the following functions:
   capturing a first screen-touching operation;
   when capturing a second screen-touching operation during the process of capturing the first screen-touching operation, determining a movement direction and a movement distance of the second screen-touching operation; and
   controlling the application interface to move along the movement direction of the second screen-touching operation over a distance equal to the movement distance of the second screen-touching operation.
The advantageous effects brought by the technical solutions according to the embodiments of the invention include the following.

In the method, apparatus and terminal device for controlling movement of an application interface provided by the embodiments of the invention, a first screen-touching operation is captured; when a second screen-touching operation is captured during the process of capturing the first screen-touching operation, a movement direction and a movement distance of the second screen-touching operation are determined; and the application interface is controlled to move along the movement direction of the second screen-touching operation over a distance equal to the movement distance of the second screen-touching operation. With the technical solutions provided by the invention, the interface is controlled to move according to the movement direction and the movement distance of the second screen-touching operation captured during the process of capturing the first screen-touching operation, thereby enabling the application interface which is only moved page by page conventionally to move freely, and thus the user's browse is more convenient.

It is to be understood that both the foregoing general description and the following detailed description are exemplary and explanatory only and are not restrictive of the invention.

### BRIEF DESCRIPTION OF THE DRAWINGS

In order to illustrate the technical solutions of the embodiments of the disclosure more clearly, a brief introduction may be given hereinafter to the accompany drawings that may be used in the description of the embodiments. Apparently, the drawings in the description below are merely for illustrating some embodiments of the invention, and other drawings may be obtained by those skilled in the art according to these drawings without paying any creative labor.
Fig.1 is an exemplary flow chart of a method for controlling movement of an application interface provided by an embodiment of the invention;
Fig.2 is an exemplary flow chart of a method for controlling movement of an application interface provided by an embodiment of the invention;
Fig.3 is a schematic diagram of displaying an operating system desktop provided by an embodiment of the invention;
Fig.4 is a schematic diagram of displaying an operating system desktop provided by an embodiment of the invention; and
Fig.5 is an exemplary block diagram of an apparatus for controlling movement of an application interface provided by an embodiment of the invention.

Through the above accompany drawings, specific embodiments of the disclosure have been shown, for which a more detailed description will be given as below. These drawings and textual description are not intended to limit the scope of the concept of the invention in any manner, but to explain the concept of the invention to those skilled in the art through particular embodiments.

### DETAILED DESCRIPTION

A clear and through description will be given to the technical solutions of the invention with reference to the accompanying drawings of the invention. Any other embodiments obtained by those skilled in the art without paying any creative labor will fall within the protection scope of the invention.

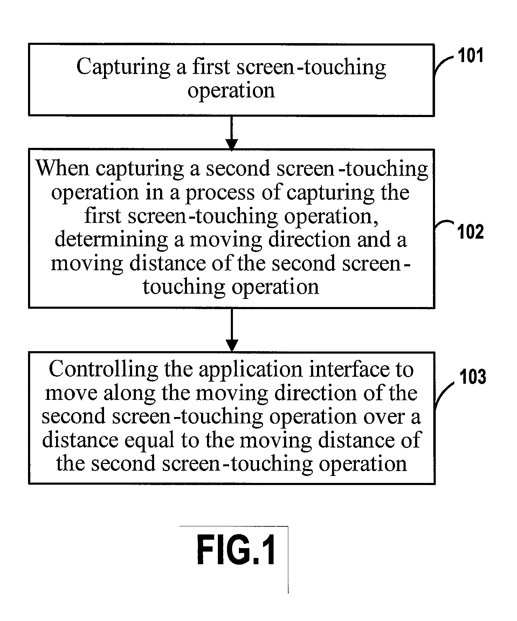

Fig.1 is an exemplary flow chart of a method for controlling movement of an application interface provided by an embodiment of the invention. The embodiment of the invention is performed by a terminal device, and the controlled application interface includes two or more pages. Referring to Fig.1, the method includes the following steps.

In step 101, a first screen-touching operation is captured.

Herein, the screen-touching operation refers to an operation triggered by the user on a touch-screen display of the terminal device, and each screen-touching operation may have an interface operation matched therewith. For example, a clicking operation on an application icon matches with an interface operation which starts an application corresponding to the application icon. It should be noted that, the matching relationship between the screen-touching operation and the interface operation may be preset by technical personnel or may be set by the user to be personalized.

The first screen-touching operation may not be limited. For example, the first screen-touching operation may be a long press operation or a sliding operation to the application interface.

For example, the first screen-touching operation in the embodiments of the invention may be a sliding operation with a certain displacement.

In the embodiments of the invention, capturing the first screen-touching operation in the step 101 includes, when it is detected that a screen-touching operation starts, determining the screen-touching operation as the first screen-touching operation.

In step 102, when a second screen-touching operation is captured during the process of capturing the first screen-touching operation, a movement direction and a movement distance of the second screen-touching operation are determined.

Herein, the movement direction of the second screen-touching operation may be a horizontal direction or a vertical direction. For example, a second screen-touching operation matched with the interface operation of turning to a next page may be a rightward sliding or a downward sliding. The matching relationship between the movement directions of the second screen-touching operation and the interface operations are not limited by the embodiments of the invention.

The movement distance refers to a distance between a starting position and a finishing position of the second screen-touching operation. The starting position and the finishing position may be denoted by coordinates. Herein, the finishing position refers to a position of a touch point of the second screen-touching operation on a movement trajectory where when the second screen-touching operation is finished.

In this step, when the first screen-touching operation is captured and the second screen-touching operation is captured before the first screen-touching operation is finished, a free movement mode is entered, and the movement direction and the movement distance of the second screen-touching operation are determined.

In step 103, the application interface is controlled to move along the movement direction of the second screen-touching operation over a distance equal to the movement distance of the second screen-touching operation.

Herein, the application interface is an interface generated according to setting data in a database of the terminal device. The setting data in the database of the terminal device may include displaying contents on the touch-screen display and displaying positions of the contents. For example, for a certain page, the displaying contents are A-F icons, the displaying positions of the icons are sequentially arranged, and so on. The application interface contains a plurality of pages, and the contents of the application interface are displayed on the touch-screen display page by page (in a pagination manner) according to the size of the touch-screen display, facilitating user to perform a browse operation.

In this step, when the user triggers the second screen-touching operation during the process of performing the first screen-touching operation, the terminal device acquires the movement direction and the movement distance of the second screen-touching operation, and controls the application interface to move along the movement direction of the second screen-touching operation over the distance equal to the movement distance of the second screen-touching operation. In the embodiments of the invention, the movement distance of the application interface is equal to the movement distance of the second screen-touching operation. Once the second screen-touching operation is finished, the application interface will be positioned at a location where the second screen-touching operation is finished. The specific contents being displayed may include partial contents of two adjacent pages. Different from the pagination displaying according to a screen-touching operation, the application interface may be moved arbitrarily, such that the user may move beyond a boundary of a page during the usage, thereby facilitating a fast browse.

The embodiments of the invention are applied to a scene in which the terminal device includes an application interface with two or more pages. Depending on different types of applications, the application interface includes but is not limited to an application program interface and an operating system interface. Herein, the application program interface may be an interface of an E-book or an interface of an E-album to be browsed by turning pages. The operating system interface may be an operating system desktop, a system setting interface, an application management interface, and the like.

It should be noted that, the matched interface operation when the second screen-touching operation is captured during the process of capturing the first screen-touching operation triggers the free movement mode of the interface, and the application interface is processed in the free movement mode according to the second screen-touching operation. Therefore, the first screen-touching operation may not be limited. For example, the first screen-touching operation may be a long press operation or a sliding operation to the application interface. Preferably, the second screen-touching operation is a sliding operation to any direction.

In the method for controlling movement of an application interface provided by the embodiments of the invention, a first screen-touching operation is captured; when a second screen-touching operation is captured during the process of capturing the first screen-touching operation, a movement direction and a movement distance of the second screen-touching operation are determined; and the application interface is controlled to move along the movement direction of the second screen-touching operation over a distance equal to the movement distance of the second screen-touching operation. With the technical solutions provided by the invention, the interface is controlled to move according to the movement direction and the movement distance of the second screen-touching operation captured during the process of capturing the first screen-touching operation, thereby enabling the application interface which is only moved page by page conventionally to be moved freely, and thus the user's browse is more convenient.

In a particular embodiment, based on the technical solution of the embodiment shown in Fig.1, the step 102 of determining the movement direction of the second screen-touching operation includes step 102a and step 102b.

In step 102a, if an angle between a horizontal direction and a direction determined by a starting-point coordinate and a finishing-point coordinate of the second screen-touching operation is less than or equal to a preset angle, the horizontal direction is determined as the movement direction of the second screen-touching operation.

Herein, the preset angle may be set by the developer, or may be set by the user to be personalized. Preferably, the preset angle is set as 45 degree.

In the embodiments of the invention, the screen-touching operation may be a substantial horizontal sliding or a substantial vertical sliding, that is, there exists an angle between the direction of the screen-touching operation and the horizontal direction. Specifically, when the angle between the horizontal direction and the direction determined by the starting-point coordinate and the finishing-point coordinate of the second screen-touching operation is less than or equal to the preset angle, the horizontal direction may be determined as the movement direction of the second screen-touching operation. The horizontal direction includes a leftward direction or a rightward direction.

In step 102b, if the angle between the horizontal direction and the direction determined by the starting-point coordinate and the finishing-point coordinate of the second screen-touching operation is greater than the preset angle, the vertical direction is determined as the movement direction of the second screen-touching operation.

In this step, if the angle between the horizontal direction and the direction determined by the starting-point coordinate and the finishing-point coordinate of the second screen-touching operation is greater than the preset angle, the vertical direction may be determined as the movement direction of the second screen-touching operation. The vertical direction includes an upward direction or a downward direction.

For example, if the angle between the horizontal direction and the direction determined by the starting-point coordinate and the finishing-point coordinate of the second screen-touching operation is 30 degree, it may be determined that the movement direction of the second screen-touching operation is the horizontal direction. If the angle between the horizontal direction and the direction determined by the starting-point coordinate and the finishing-point coordinate of the second screen-touching operation is 60 degree, it may be determined that the movement direction of the second screen-touching operation is the vertical direction.

However, instead of the implementations described in the above steps 102a and 102b, the movement of the application interface may also be controlled according to an actual movement direction of the second screen-touching operation.

In a particular embodiment, based on the technical solution of the embodiment shown in Fig.1, the step 102 of determining the movement direction of the second screen-touching operation may include any one of the following steps 102c and 102d.

In step 102c, according to the starting-point coordinate and the finishing-point coordinate of the second screen-touching operation, a straight distance between the starting-point coordinate and the finishing-point coordinate is acquired, and the straight distance is determined as the movement distance of the second screen-touching operation.

In this step, according to the starting-point coordinate and the finishing-point coordinate of the second screen-touching operation, the straight distance between the starting-point coordinate and the finishing-point coordinate is calculated, and the straight distance is determined as the movement distance of the second screen-touching operation.

In step 102d, according to a preset number of coordinates between the starting-point coordinate and the finishing-point coordinate of the second screen-touching operation, an arc distance between the starting-point coordinate and the finishing-point coordinate is acquired, and the arc distance is determined as the movement distance of the second screen-touching operation.

In this step, a number of coordinates, which is equal to a preset number, between the starting-point coordinate and the finishing-point coordinate of the second screen-touching operation are selected, a straight distance between every two adjacent coordinates is acquired, and the acquired straight distance between every two adjacent coordinates is accumulated together, the calculated total distance is acquired as the arc distance between the starting-point coordinate and the finishing-point coordinate is acquired, and the arc distance is determined as the movement distance of the second screen-touching operation.

It should be noted that, whether the movement trajectory of the second screen-touching operation is a straight line or an arc, any of the above methods may be applied so as to acquire the movement distance. In order to determine the movement distance more accurately, the type of the moving trajectory may be judged firstly, that is, to judge whether the moving trajectory of the second screen-touching operation is a straight line or an arc line. When it is detected that the moving trajectory of the second screen-touching operation is a straight line, preferably, the straight distance between the starting-point coordinate and the finishing-point coordinate is calculated according to the starting-point coordinate and the finishing-point coordinate of the second screen-touching operation, and the straight distance is determined as the movement distance of the second screen-touching operation. When it is detected that the moving trajectory of the second screen-touching operation is an arc line, a preset number of coordinates between the starting-point coordinate and the finishing-point coordinate of the second screen-touching operation are selected, a straight distance between every two adjacent coordinates is acquired, and the acquired straight distance between every two adjacent coordinates is accumulated together, the calculated total distance is acquired as the arc distance between the starting-point coordinate and the finishing-point coordinate is acquired, and the arc distance is determined as the movement distance of the second screen-touching operation.

Herein, the preset number may be set by the developer, or may be set by the user to be personalized. In order to ensure the accuracy of the acquired arc distance, the preset number may be set as a larger number. The larger the preset number is, the more accurate the acquired arc distance will be.

In the embodiments of the invention, depending on different application interfaces, the first screen-touching operation and the second screen-touching operation may also be vertically straight sliding, in addition to horizontally straight sliding. The movement direction of the first screen-touching operation and that of the second screen-touching operation are parallel to each other or perpendicular to each other, that is, may use one of the following forms: both the first screen-touching operation and the second screen-touching operation are horizontally straight sliding operations or vertically straight sliding operations; or, the first screen-touching operation is a horizontally straight sliding operation and the second screen-touching operation is a vertically straight sliding operation; or, the first screen-touching operation is a vertically straight sliding operation and the second screen-touching operation is a horizontally straight sliding operation.

In a particular embodiment, based on the technical solution of the embodiment shown in Fig.1, after the step 103 of controlling the application interface to move along the movement direction of the second screen-touching operation over the distance equal to the movement distance of the second screen-touching operation, the method further includes step 104.

In step 104, when it is detected that the second screen-touching operation is finished, the application interface is positioned at a location where the second screen-touching operation is finished.

Herein, the finishing of the second screen-touching operation means that the touch point of the second screen-touching operation leaves the touch-screen display. Specifically, when it is detected that the second screen-touching operation is finished, the application interface is positioned at a location where the second screen-touching operation is finished and maintained thereto.

For example, the application interface includes a plurality of pages, and each page displays a plurality of application icons. For example, the first screen-touching operation is a horizontally straight sliding operation and the second screen-touching operation is a vertically straight sliding operation. Once a vertically straight sliding operation is captured during the process of capturing a horizontally straight sliding operation on a first page currently displayed, the currently displayed page is controlled to move along the movement direction of the vertically straight sliding operation over a distance equal to the movement distance of the vertically straight sliding operation. With the movement of the pages, the contents displayed on the application interface change continuously. The displaying contents change from all of the application icons of the first page into a part of the icons of the first page and a part of the icons of a second page adjacent to the first page. Once the vertically straight sliding operation is finished, the current displaying contents don't change any more, and are positioned at a location where the vertically straight sliding operation currently reaches and maintained thereto. That is, the displaying contents are a part of the icons of the first page and a part of the icons of the second page adjacent to the first page.

In a particular embodiment, based on the technical solution of the embodiment shown in Fig.1, after the step 104 of positioning the application interface at the location where the second screen-touching operation is finished, the method further includes step 105.

In step 105, a third screen-touching operation for triggering a pagination movement of the application interface is captured, and the application interface is controlled to move to a first full page along a movement direction of the third screen-touching operation.

For example, the third screen-touching operation is a sliding operation, and matches with an interface operation of turning pages.

Step 105 may use any one of the following manners.

A first manner, when the displaying contents of the application interface after the positioning are any one page in the application interface, the application interface after the positioning is moved according to the third screen-touching operation.
As an optional implementation, when the application interface is positioned at a location where the second screen-touching operation is finished, and the displaying contents of the application interface when the second screen-touching operation is finished are any one full page in the application interface, and when the third screen-touching operation is captured, the application interface may be moved according to an interface operation matched with the third screen-touching operation. It should be noted that, in the embodiments of the invention, the displaying contents of the full page are all the contents to be displayed on this page saved in the database of the terminal device.

For example, if the displaying contents of the application interface after the positioning are the contents of page 2, and the acquired third screen-touching operation is a rightward sliding, the application interface is moved to display the contents of page 3.

A second manner, when the displaying contents of the application interface after the positioning are a part of the contents of any one page in the application interface and a part of the contents of a page adjacent to the previous page, moving the application interface after the positioning to the first full page according to the third screen-touching operation.

Herein, the application interface displays the contents contained in the application interface in a pagination manner of a plurality of pages. The page adjacent to any one page may be referred to as an adjacent page of the any one page, for example, a previous page or a next page of the any one page.

As an optional implementation, if the application interface is positioned at a location where the second screen-touching operation is finished, and the displaying contents in the application interface when the second screen-touching operation is finished are a part of the contents of any one page of the application interface and a part of the contents of a page adjacent to the previous page, when the third screen-touching operation is captured, the application interface may be moved to the first full page according to an interface operation matched with the third screen-touching operation. Since the second screen-touching operation has been finished, the application interface has exited from the free movement mode. In this case, once the third screen-touching operation is captured, the current application interface is also processed according to the interface operation matched with the third screen-touching operation. That is, when the third screen-touching operation is captured, the page is fully displayed page by page according to the third screen-touching operation. When the third screen-touching operation is finished, the application interface should display a full page of the page at which the application interface is located when the operation is finished.

For example, if the displaying contents of the application interface after the positioning are a part of the contents of a second page and a part of the contents of a third page, and the acquired third screen-touching operation is a rightward sliding, the application interface is moved to display the full contents of the third page. If the user performs a rightward sliding operation once more, the application interface displays the contents of a fourth page. Or, if the user performs a leftward sliding operation, the application interface displays the contents of the second page.

In the method for controlling movement of an application interface provided by the embodiments of the invention, a first screen-touching operation is captured; when a second screen-touching operation is captured during the process of capturing the first screen-touching operation, a movement direction and a movement distance of the second screen-touching operation are determined; and the application interface is controlled to move along the movement direction of the second screen-touching operation over a distance equal to the movement distance of the second screen-touching operation. With the technical solutions provided by the invention, the interface is controlled to move according to the movement direction and the movement distance of the second screen-touching operation captured during the process of capturing the first screen-touching operation, thereby enabling the application interface which is only moved page by page conventionally to move freely, and thus the user's browse is more convenient.

All the above optional technical solutions may be combined in any manner to from an embodiment of the invention, which will not be repeated herein.

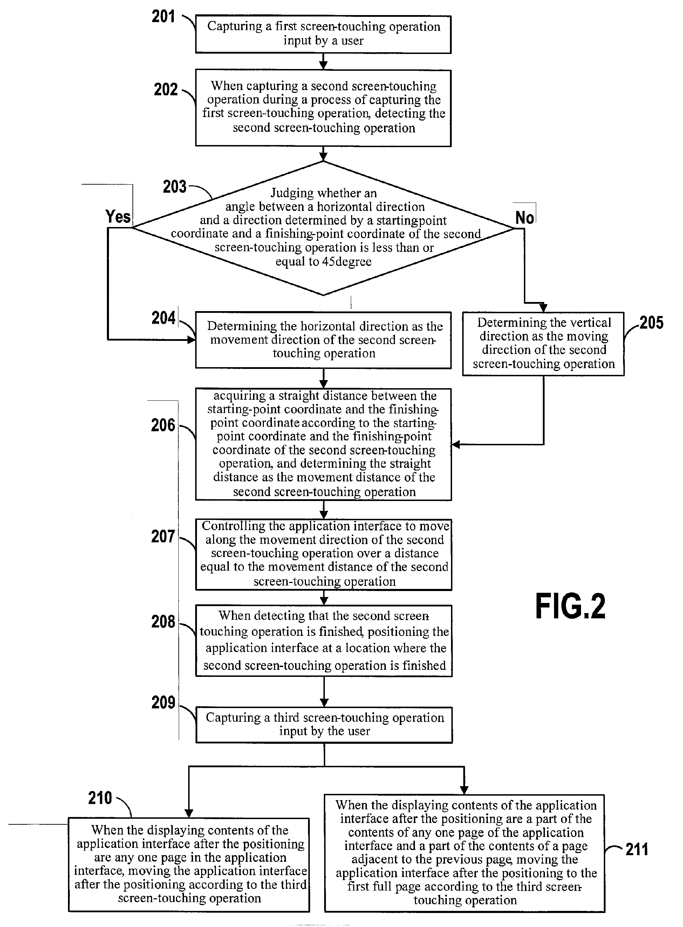

Fig.2 is an exemplary flow chart of a method for controlling movement of an application interface provided by an embodiment of the invention. The embodiment of the invention is performed by a terminal device, and the controlled application interface includes two or more pages. Referring to Fig.2, the method includes the following steps.

In step 201, a first screen-touching operation input by a user is captured.

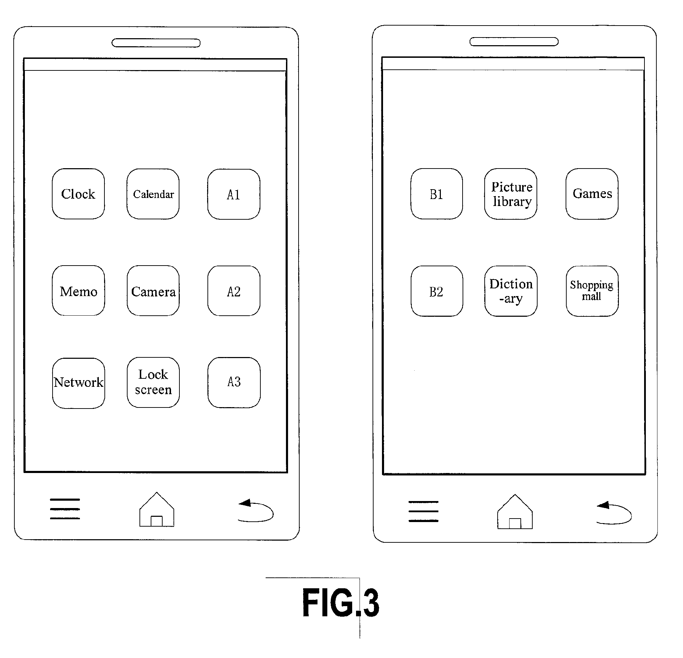

The embodiment of the invention is described, taking an operating system desktop for example. Fig.3 is a schematic diagram of displaying a first page and a second page of an operating system desktop provided by an embodiment of the invention. Herein, the first page includes 9 application icons, which are respectively clock, memo, network, calendar, camera, lock screen, A1, A2 and A3. The second page includes 6 application icons, which are respectively B1, B2, picture library, dictionary, games and shopping mall.

In step 202, when a second screen-touching operation is captured during the process of capturing the first screen-touching operation, the second screen-touching operation is detected.

When the second screen-touching operation is captured during the process of capturing the first screen-touching operation, the application interface enters a free movement mode, and the pages are no longer displayed page by page.

Based on the example shown in Fig.3, only taking a sliding operation from the first page to the second page as an example of the second screen-touching operation, the present embodiment is described.

In step 203, it is judged whether an angle between a horizontal direction and a direction determined by a starting-point coordinate and a finishing-point coordinate of the second screen-touching operation is less than or equal to 45 degree. If it is, step 204 is performed, and if it is not, step 205 is performed.

In step 204, the horizontal direction is determined as the movement direction of the second screen-touching operation, and step 206 is performed.

In step 205, the vertical direction is determined as the movement direction of the second screen-touching operation, and step 206 is performed.

In step 206, a straight distance between the starting-point coordinate and the finishing-point coordinate is acquired according to the starting-point coordinate and the finishing-point coordinate of the second screen-touching operation, and the straight distance is determined as the movement distance of the second screen-touching operation.

In step 207, the application interface is controlled to move along the movement direction of the second screen-touching operation over a distance equal to the movement distance of the second screen-touching operation.

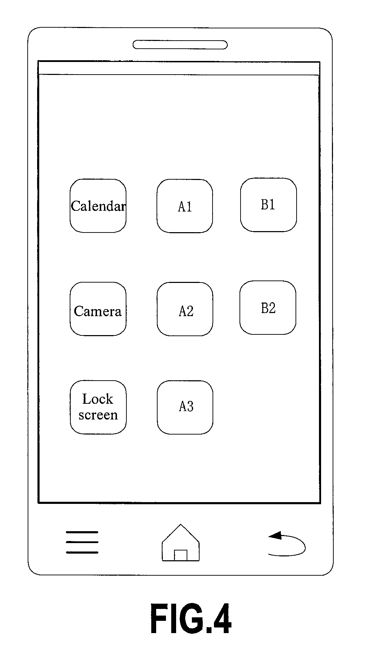

Based on the example shown in Fig.3, during the performing of the second screen-touching operation, the displaying contents of the application interface continuously change. When the currently displayed application interface is as shown in Fig.4, the displayed application icons include calendar, camera, lock screen, A1, A2 and A3 of the first page and B1 and B2 of the second page.

In step 208, when it is detected that the second screen-touching operation is finished, the application interface is positioned at a location where the second screen-touching operation is finished.

When it is detected that the second screen-touching operation is finished, the application interface has exited from the free movement mode, and is maintained where the second screen-touching operation is finished.

Based on the example shown in Fig.7, when it is detected that the second screen-touching operation is finished, the displaying contents of the application interface are no longer changed and maintained the displaying as shown in Fig.4. The displayed application icons include calendar, camera, lock screen, A1, A2 and A3 of the first page and B1 and B2 of the second page.

Through the free movement mode which allows movement beyond a boundary of a page, the pages may be displayed seamlessly. A part of the contents of the adjacent pages may be displayed in a same displayed interface at the same time, which facilitates the user's browse, and provides a new page-movement mode and a new page-displaying mode.

In step 209, a third screen-touching operation input by the user is captured.

In step 210, when the displaying contents of the application interface after the positioning are any one page of the application interface, the application interface after the positioning is moved according to the third screen-touching operation.

In step 211, when the displaying contents of the application interface after the positioning are a part of the contents of any one page of the application interface and a part of the contents of a page adjacent to the previous page, the application interface after the positioning is moved to the first full page according to the third screen-touching operation.

In the method for controlling movement of an application interface provided by the embodiments of the invention, a first screen-touching operation is captured; when a second screen-touching operation is captured during the process of capturing the first screen-touching operation, a movement direction and a movement distance of the second screen-touching operation are determined; and the application interface is controlled to move along the movement direction of the second screen-touching operation over a distance equal to the movement distance of the second screen-touching operation. With the technical solutions provided by the invention, the interface is controlled to move according to the movement direction and the movement distance of the second screen-touching operation captured during the process of capturing the first screen-touching operation, thereby enabling the application interface which is only moved page by page conventionally to move freely, and thus the user's browse is more convenient.

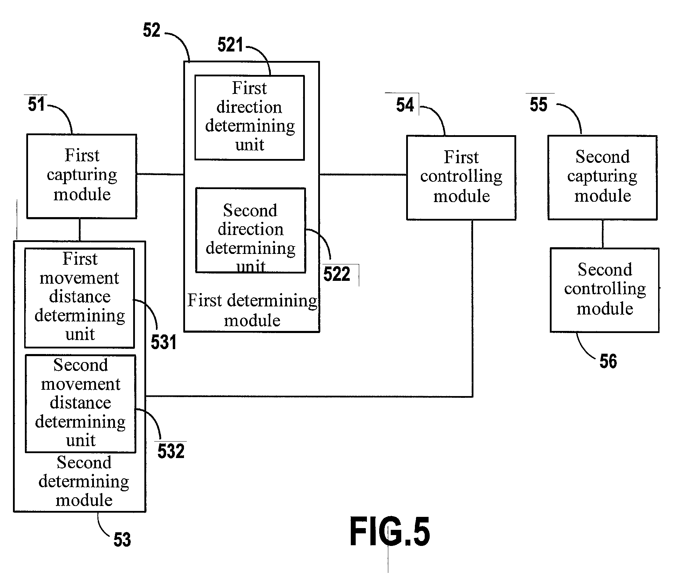

Fig.5 is an exemplary block diagram of an apparatus for controlling movement of an application interface provided by an embodiment of the invention. Referring to Fig.5, the apparatus includes:
a first capturing module 51, configured to capture a first screen-touching operation, and capture a second screen-touching operation during the process of capturing the first screen-touching operation;
a first determining module 52, configured to determine a movement direction of the second screen-touching operation when the first capturing module 51 captures the second screen-touching operation during the process of capturing the first screen-touching operation;
a second determining module 53, configured to determine a movement distance of the second screen-touching operation when the first capturing module 51 captures the second screen-touching operation during the process of capturing the first screen-touching operation; and
a first controlling module 54, configured to control the application interface to move along the movement direction of the second screen-touching operation over a distance equal to the movement distance of the second screen-touching operation.

In a particular embodiment, the first determining module 52 includes:
a first direction-determining unit 521, configured to, when the first capturing module 51 captures the second screen-touching operation during the process of capturing the first screen-touching operation, if an angle between a horizontal direction and a direction determined by a starting-point coordinate and a finishing-point coordinate of the second screen-touching operation is less than or equal to a preset angle, determine the horizontal direction as the movement direction of the second screen-touching operation; and
a second direction-determining unit 522, configured to, when the first capturing module 51 captures the second screen-touching operation during the process of capturing the first screen-touching operation, if the angle between the horizontal direction and the direction determined by the starting-point coordinate and the finishing-point coordinate of the second screen-touching operation is greater than the preset angle, determine a vertical direction as the movement direction of the second screen-touching operation.

In a particular embodiment, the second determining module 53 includes:
a first movement distance determining unit 531, configured to, when the first capturing module 51 captures the second screen-touching operation during the process of capturing the first screen-touching operation, acquire a straight distance between the starting-point coordinate and the finishing-point coordinate according to a starting-point coordinate and a finishing-point coordinate of the second screen-touching operation, and determine the straight distance as the movement distance of the second screen-touching operation; and/or,
a second movement distance determining unit 532, configured to, acquire an arc distance between the starting-point coordinate and the finishing-point coordinate according to a preset number of coordinates between the starting-point coordinate and the finishing-point coordinate of the second screen-touching operation when the first capturing module 51 captures the second screen-touching operation during the process of capturing the first screen-touching operation, and determine the arc distance as the movement distance of the second screen-touching operation.

In a particular embodiment, the first controlling module 54 is further configured to, when the first capturing module 51 detects that the second screen-touching operation is finished, position the application interface at a location where the second screen-touching operation is finished.

In a particular embodiment, the apparatus further includes:
a second capturing module 55 configured to capture a third screen-touching operation for triggering a pagination movement of the application interface; and
a second controlling module 56 configured to control the application interface to move to a first full page along a movement direction of the third screen-touching operation.

In the apparatus for controlling movement of an application interface provided by the embodiments of the invention, a first screen-touching operation is captured; when a second screen-touching operation is captured during the process of capturing the first screen-touching operation, a movement direction and a movement distance of the second screen-touching operation are determined; and the application interface is controlled to move along the movement direction of the second screen-touching operation over a distance equal to the movement distance of the second screen-touching operation. With the technical solutions provided by the invention, the interface is controlled to move according to the movement direction and the movement distance of the second screen-touching operation captured during the process of capturing the first screen-touching operation, thereby enabling the application interface which is only moved page by page conventionally to move freely, and thus the user's browse is more convenient.

It should be noted that, in the apparatus for controlling movement of an application interface provided by the above embodiments, the above functions may be assigned to different modules as desired, that is, the internal structure of the terminal device may be divided into different functional modules, so as to implement all or part of the functions described above. In addition, the apparatus for controlling movement of an application interface provided by the above embodiments belongs to the same conception with the method embodiments for controlling movement of an application interface, therefore, the detailed implementing processes of the apparatus may refer to those of the embodiments of the method, and the detailed description of which are not repeated herein.

It should be understood by those skilled in the art that, all or part of the steps of the above embodiments may be implemented through hardware, or through a program that instructs a related hardware. The program may be stored on a computer-readable storage medium which may be read-only memory, magnetic or optical disks.

The embodiments of the invention also provides a terminal device for controlling movement of an application interface, the terminal device includes:
a touch-screen display;
one or more processors;
a memory; and
one or more modules, stored in the memory and configured to be executed by one or more processors, the one or more modules having the following functions:
   capturing a first screen-touching operation;
   when capturing a second screen-touching operation during the process of capturing the first screen-touching operation, determining a movement direction and a movement distance of the second screen-touching operation; and
   controlling the application interface to move along the movement direction of the second screen-touching operation over a distance equal to the movement distance of the second screen-touching operation.

In a particular embodiment, the one or more modules are configured to, if an angle between a horizontal direction and a direction determined by a starting-point coordinate and a finishing-point coordinate of the second screen-touching operation is less than or equal to a preset angle, determine the horizontal direction as the movement direction of the second screen-touching operation; and
if the angle between the horizontal direction and the direction determined by the starting-point coordinate and the finishing-point coordinate of the second screen-touching operation is greater than the preset angle, determine a vertical direction as the movement direction of the second screen-touching operation.

In a particular embodiment, the one or more modules are configured to, acquire a straight distance between the starting-point coordinate and the finishing-point coordinate according to a starting-point coordinate and a finishing-point coordinate of the second screen-touching operation, and determine the straight distance as the movement distance of the second screen-touching operation;
or,
according to a preset number of coordinates between the starting-point coordinate and the finishing-point coordinate of the second screen-touching operation, acquire an arc distance between the starting-point coordinate and the finishing-point coordinate, and determine the arc distance as the movement distance of the second screen-touching operation.

In a particular embodiment, the one or more modules are configured to, when detecting that the second screen-touching operation is finished, position the application interface at a location where the second screen-touching operation is finished.

In a particular embodiment, the one or more modules are configured to capture a third screen-touching operation for triggering a pagination movement of the application interface; and control the application interface to move to a first full page along a movement direction of the third screen-touching operation.

The foregoing are only preferred embodiments of the present disclosure, and do not intend to limit the present disclosure. Any variation, equivalent substitution and modification that fall within the spirit and principle of the present disclosure should be embraced by the protection scope of the disclosure.

## Claims

1. A method for controlling movement of an application interface which comprises two or more pages, **characterized in that**, the method comprises:
capturing a first screen-touching operation;
when capturing a second screen-touching operation during the process of capturing the first screen-touching operation, determining a movement direction and a movement distance of the second screen-touching operation; and
controlling the application interface to move along the movement direction of the second screen-touching operation over a distance equal to the movement distance of the second screen-touching operation.

2. The method according to claim 1, **characterized in that**, determining the movement direction of the second screen-touching operation comprises:
if an angle between a horizontal direction and a direction determined by a starting-point coordinate and a finishing-point coordinate of the second screen-touching operation is less than or equal to a preset angle, determining the horizontal direction as the movement direction of the second screen-touching operation; and
if the angle between the horizontal direction and the direction determined by the starting-point coordinate and the finishing-point coordinate of the second screen-touching operation is greater than the preset angle, determining a vertical direction as the movement direction of the second screen-touching operation.

3. The method according to claim 1, **characterized in that**, determining the movement distance of the second screen-touching operation comprises:
acquiring a straight distance between the starting-point coordinate and the finishing-point coordinate according to a starting-point coordinate and a finishing-point coordinate of the second screen-touching operation, and determining the straight distance as the movement distance of the second screen-touching operation;
or,
acquiring an arc distance between the starting-point coordinate and the finishing-point coordinate according to a preset number of coordinates between the starting-point coordinate and the finishing-point coordinate of the second screen-touching operation, and determining the arc distance as the movement distance of the second screen-touching operation.

4. The method according to claim 1, **characterized in that**, after controlling the application interface to move along the movement direction of the second screen-touching operation over the distance equal to the movement distance of the second screen-touching operation, the method further comprises:
when detecting that the second screen-touching operation is finished, positioning the application interface at a location where the second screen-touching operation is finished.

5. The method according to claim 4, **characterized in that**, after positioning the application interface at the location where the second screen-touching operation is finished, the method further comprises:
capturing a third screen-touching operation for triggering a pagination movement of the application interface; and
controlling the application interface to move to a first full page along a movement direction of the third screen-touching operation.

6. An apparatus for controlling movement of an application interface which comprises two or more pages, **characterized in that**, the apparatus comprises:
a first capturing module configured to capture a first screen-touching operation, and capture a second screen-touching operation during the process of capturing the first screen-touching operation;
a first determining module configured to determine a movement direction of the second screen-touching operation when the first capturing module captures the second screen-touching operation during the process of capturing the first screen-touching operation;
a second determining module configured to determine a movement distance of the second screen-touching operation when the first capturing module captures the second screen-touching operation during the process of capturing the first screen-touching operation; and
a first controlling module configured to control the application interface to move along the movement direction of the second screen-touching operation over a distance equal to the movement distance of the second screen-touching operation.

7. The apparatus according to claim 6, **characterized in that**, the first determining module comprises:
a first direction-determining unit configured to, when the first capturing module captures the second screen-touching operation during the process of capturing the first screen-touching operation, if an angle between a horizontal direction and a direction determined by a starting-point coordinate and a finishing-point coordinate of the second screen-touching operation is less than or equal to a preset angle, determine the horizontal direction as the movement direction of the second screen-touching operation; and
a second direction-determining unit configured to, when the first capturing module captures the second screen-touching operation during the process of capturing the first screen-touching operation, if the angle between the horizontal direction and the direction determined by the starting-point coordinate and the finishing-point coordinate of the second screen-touching operation is greater than the preset angle, determine a vertical direction as the movement direction of the second screen-touching operation.

8. The apparatus according to claim 6, **characterized in that**, the second determining module comprises:
a first movement distance determining unit configured to, when the first capturing module captures the second screen-touching operation during the process of capturing the first screen-touching operation, acquire a straight distance between the starting-point coordinate and the finishing-point coordinate according to a starting-point coordinate and a finishing-point coordinate of the second screen-touching operation, and determine the straight distance as the movement distance of the second screen-touching operation;
or,
a second movement distance determining unit configured to, when the first capturing module captures the second screen-touching operation during the process of capturing the first screen-touching operation, acquire an arc distance between the starting-point coordinate and the finishing-point coordinate according to a preset number of coordinates between the starting-point coordinate and the finishing-point coordinate of the second screen-touching operation, and determine the arc distance as the movement distance of the second screen-touching operation.

9. The apparatus according to claim 6, **characterized in that**, the first controlling module is further configured to position the application interface at a location where the second screen-touching operation is finished when the first capturing module detects that the second screen-touching operation is finished.

10. The apparatus according to claim 9, **characterized in that**, the apparatus further comprises:
a second capturing module configured to capture a third screen-touching operation for triggering a pagination movement of the application interface; and
a second controlling module configured to control the application interface to move to a first full page along a movement direction of the third screen-touching operation.

11. A terminal device for controlling movement of an application interface which comprises two or more pages, **characterized in that**, the terminal device comprises:
a touch-screen display;
one or more processors;
a memory; and
one or more modules, stored in the memory and configured to be executed by one or more processors, the one or more modules having the following functions of:
capturing a first screen-touching operation;
when capturing a second screen-touching operation during the process of capturing the first screen-touching operation, determining a movement direction and a movement distance of the second screen-touching operation; and
controlling the application interface to move along the movement direction of the second screen-touching operation over a distance equal to the movement distance of the second screen-touching operation.
